# EUROPEAN PATENT SPECIFICATION

(11) **EP 1 316 484 B1**
(45) Date of publication and mention of the grant of the patent: **21.12.2011**
(21) Application number: 01128229.0
(22) Date of filing: 28.11.2001
(51) Int. Cl.: B60R 22/20, B60R 22/24

(54) **Mounting system for safety belt system**
Montagesystem für Sicherheitsgurtsystem
Système de montage pour ceinture de sécurité

(43) Date of publication of application: 04.06.2003
(73) Proprietor: Volvo Car Corporation, 405 31 Göteborg (SE)
(72) Inventor: Adin, Daniel, 44141 Alingsas (SE); Adolfsson, Peter, 42244 Hisings-Backa (SE); Gunnarsson, Kristina, 412 59 Göteborg (SE)
(74) Representative: Vink, Charlotta

(56) References cited:
- EP-A- 0 639 485
- WO-A-01/70557
- DE-A- 1 680 020
- US-A- 4 971 357
- US-A- 4 974 876

## Description

### Field of the invention

The present invention relates to a system for mounting one or more elements of a safety belt system with respect to a pillar of a vehicle body, and to a vehicle comprising such a system .

### Background of the invention

One of the things the B-pillar of a vehicle is designed for is to handle the force applied by the safety belt system at collisions. In recent years cross-country trucks have become very popular. In this type of vehicle the centre of gravity is normally higher than in general vehicles. This elevation of the centre of gravity of vehicles has led to an increase in rollover-incidents. Thus, the compressive strength of the B-pillars have become essential for personal safety in cross country trucks. However, the integration of safety belt devices in B-pillars weakens the compressive strength of the B-pillars. Also, devices provided on the B-pillar facing inwards might cause damage at the compression of a B-pillar.

One of the functions of the pillars of a vehicle, including the so-called B-pillar, is to provide support for the roof of the vehicle in the event that the vehicle is involved in an accident which may tend to crush the roof. Ways to enhance this important function can therefore be advantageous.

The most common safety belt devices comprise a safety belt retractor. The retractor is either provided on the floor of the vehicle or directly on the B-pillar, depending upon the specific design criteria for the safety belt system. In the case of a retractor mounted on the B-pillar, the retractor is mounted by a bracket or similar mounting method on the B-pillar.

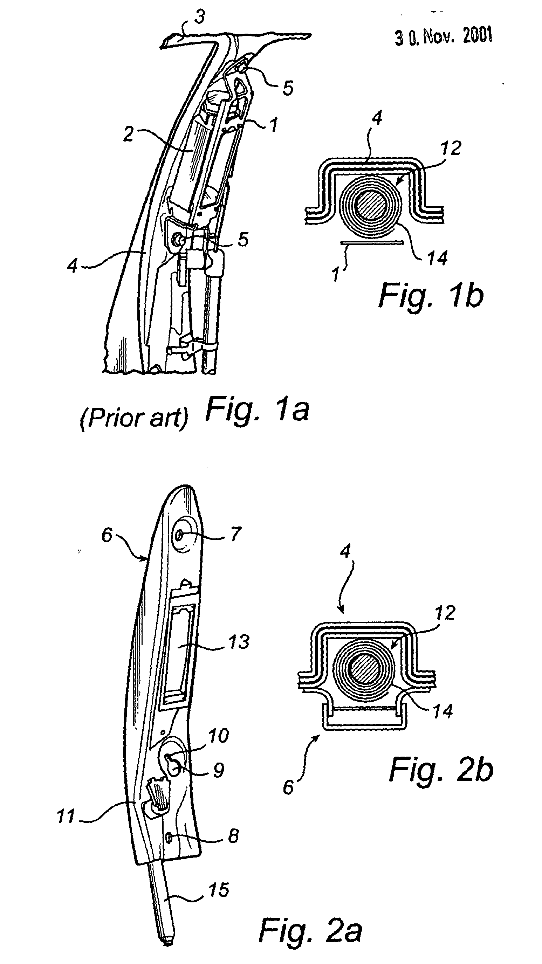

A prior art mounting of a seat belt retractor on the B-pillar of a car body is shown in Figures 1A and 1B. A carrying device 1, a bracket, carries an automatic height adjusted retractor 2 mounted on a car body 3, more specifically the B-pillar 4 of a car body 3. The carrying device 1 is mounted on the car body 3 with two bolts 5. Carrying device 1 is very effective for securely mounting retractor 2 such that retractor 2 can fully carry out its functions. However, carrying device 1 is not designed to provide any additional structural integrity to B-pillar 4.

EP 0 639 485 describes a method of mounting a safety belt to a vehicle. The safety belt and its corresponding devices, for example a high adjustment arrangement, are arranged to a premounted supporting element. The supporting element is arranged to the inside of the car body, for example a centre pillar.

WO01/70557 describes how to easier mount a structural element on a vehicle structure, in the area of the B-pillar.

DE 1680020 describes another type of roof carrying pillar for vehicles.

### Summary of the invention

An object of the present invention is to provide a system that reinforces the B-pillar of a vehicle, and more specifically reinforces the B-pillar regarding compressive forces. Another object is to provide a vehicle comprising a such a system.

These objects are achieved by a system set forth in the appended claims.

According to one aspect of the present invention there is provided a system for mounting one or more elements of a safety belt system with respect to a pillar of a vehicle body, wherein the system includes a device mounted on the pillar to form a cavity with substantially-closed cross section in combination with said pillar, the device reinforces the pillar regarding compressive forces. Furthemore the elements of said safety belt system is mounted within the cavity, and the device is provided with a predefined bend that in mounted position is directed outwards from the interior of a vehicle. If the compressive forces are large and the B-pillar bends, the device bends in the same direction as the B-pillar.

The device according to an embodiment has a cross section that is preferably essentially U-shaped and when mounted on the B-pillar forms a cavity in combination with the B-pillar, the cavity comprising elements of a safety belt system. The U-shape of the device in combination with the U-shape of the B-pillar forms a cavity which is more resistant to compressive forces than alone the U-shaped B-pillar. The cavity is preferably of a closed or substantially-closed cross-section.

In order to facilitate the mounting of the safety belt system, elements of the safety belt system are preferably comprised in the device. Depending on what kind of safety belt system, the shifter or the retractor is comprised in the device.

According to one embodiment of the invention the safety belt retractor is an automatic height adjusted retractor for automatic height adjustment. Since a retractor of thins type requires more space than a regular retractor asing a device according to the present invention is most beneficial.

According to another embodiment of the invention the device is provided with an elongate bore with one end thereof having a diameter larger than the width of said elongate bore for mounting purposes. A device according to the present invention comprising an automatic height adjusted retractor is quite heavy. In order to simplify the mounting the device is premounted on the car body. For example, a bolt is screwed into the B-pillar, the head of the bolt being small enough to slip through the one end of the elongated bore with the larger diameter but larger than the width of the rest of the bore. Thus, when finally fixing the device to the car body the device need not be lifted. Also, in order to decrease the weight, the device is made of high-tensile steel.

According to one aspect of the present invention a vehicle is provided comprising a system as disclosed above.

### Brief description of the drawings

The invention is explained below in more detail with reference to the drawings, wherein:
Figure 1A is a perspective view of a device mounted on a car body, carrying an automatic height adjusted retractor, according to prior art.
Figure 1B shows the cross-section of the same prior art device and the B-pillar.
Figure 2A is a perspective view of a device, carrying an automatic height adjusted retractor, according to the present invention.
Figure 2B shows the cross-section of the same device and the B-pillar.
Figure 3 is an overall view of a car body with a device according to the present invention.

### Description of preferred embodiments

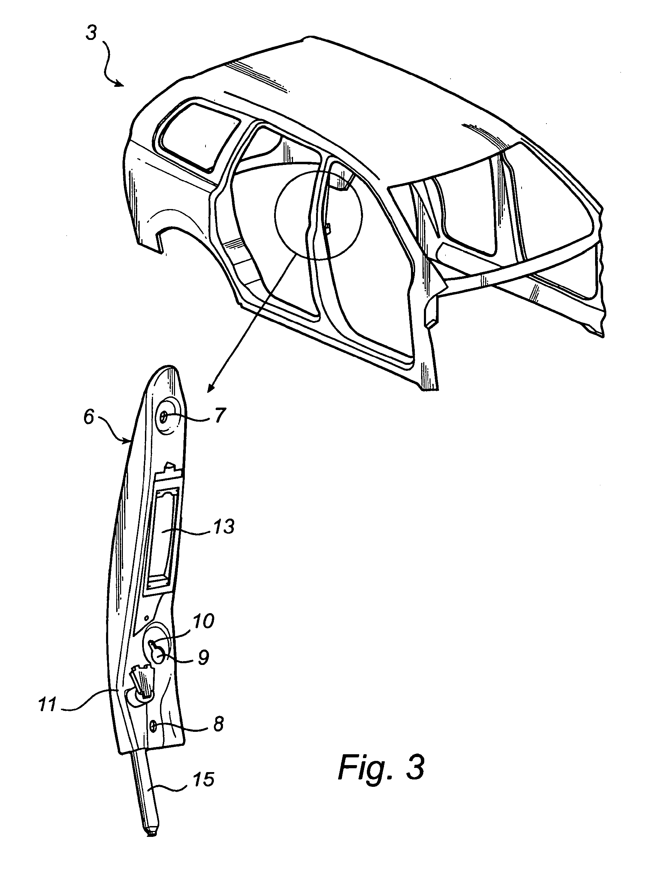

Figures 2A, 2B and 3 show a device 6, in this case a bracket, according to the present invention. In a preferred embodiment of the present invention the device 6 comprises an upper hole 7 and a lower hole 8 for fixing the device 6 onto the B-pillar 4. The device 6 also comprises an intermediate hole 9 with an elongate bore 10 extending from the upper part of the intermediate hole 9. When mounting the device 6, for instance, a bolt is screwed into the car body 3 and the device 6 is brought to its position and said bolt is fitted in the intermediate hole 9. When the head of the bolt has passed the hole 9 completely, the device 6 is moved downwards so that the elongate bore 10 slides down over the body of the bolt. When the bolt is in contact with the upper end of the elongate bore 10, the assembler does not need to carry the entire weight of the device 6 fixing the device via the upper 7 and the lower hole 8, respectively.

Further, in a preferred embodiment of the present invention, the device 6 comprises a predefined bend 11 following the contours of the B-pillar outwards seen from the interior of the car body. At compression of the B-pillar 4 the device 6 bends outwards together with the B-pillar 4 due to the predefined bend 11. Predefined bend 11 prevents device 6 from bending inwards at compression, preventing intrustion of device 6 into the passenger compartment of the vehicle.

In a preferred embodiment of the present invention the device 6 has attached to it a safety belt retractor 12 and suitable means (not shown) for holding the safety belt retractor 12 and an aperture 13 through which the safety belt 14 can pass. The aperture 13 height is preferably at least twice the width of the safety belt 14 in order to allow the use of an automatic height adjusted retractor. Further, the design of the device 6 is preferably such that it is essentially U-shaped. Thus, the safety belt retractor 12 is essentially embodied between the device 6 and the B-pillar 4. The U-shape of the device 6 in combination with the B-pillar defines a cavity which contributes considerably to the compressive strength of the B-pillar 4. The cavity is preferably of a closed or substantially closed cross section, enhancing said compressive strength.

Further, in a preferred embodiment of the present invention, the device 6 comprises a tensioning device 15. Said tensioning device 15 is a equipped with a pyrotechnic charge which is triggered by a collision of the vehicle or a rollover for tensioning of the safety belt 14. This tensioning aims to properly strap down the person using the safety belt 14 and thereby to avoid personal injuries due to bumping into the interior of the vehicle.

In an alternative configuration of a safety belt system, the retractor for the safety belt would be mounted on the floor of the vehicle. In such case, the device 6 mounted on the B-pillar holds a safety belt shifter, such as a D-loop (as known in the art) where the shifter is provided on a suitable sliding device (not shown) positioned at the same level as the aperture 13 for height adjustment.

For maximum tensile strength the device 6 is preferably made of high-tensile steel. A further advantage with using high-tensile steel is that it decreases the weight of the device 6 and hence the total weight of the vehicle, which is important considering fuel-consumption and mounting the device 6.

The foregoing is a disclosure of preferred embodiments for practicing the present invention. However, it is apparent that device incorporating modifications and variations will be obvious to one skilled in the art. Inasmuch as the foregoing disclosure is intended to enable one skilled in the art to practice the instant invention, it should not be construed to be limited thereby, but should be construed to include such modifications and variations as fall within the scope of the appended claims.

## Claims

1. A system for mounting one or more elements (12, 15) of a safety belt system with respect to a pillar (4) of a vehicle body, wherein said system includes a device (6) mounted on said pillar (4) to form a cavity with substantially-closed cross section in combination with said pillar, said device (6) reinforces the pillar(4) regarding compressive forces, said elements (12, 15) of said safety belt system mounted within said cavity **characterized in that**
said device (6) is provided with a predefined bend (11) that in mounted position is directed outwards from the interior of a vehicle.

2. A system according to claim 1, wherein said device has an essentially U-shaped cross section.

3. A system according to claim 1, wherein said elements include a safety belt shifter.

4. A system according to claim 1, wherein said elements include a safety belt retractor (12).

5. A system according to claim 4, wherein said safety belt retractor (12) is an automatic height adjusted retractor for automatic height adjustment.

6. A system according to claim 1, wherein the device (6) is provided with an elongate bore (10) with one end (9) thereof having a diameter larger than the width of said elongate bore (10) for mounting purposes.

7. A system according to claim 1, wherein the device (6) is made of high-tensile steel.

8. A vehicle comprising a system for mounting one or more elements (12, 15) of a safety belt system according to any one of the preceding claims.

## Patentansprüche

1. System zum Montieren eines oder mehrerer Elemente (12, 15) eines Sicherheitsgurtsystems mit Bezug auf eine Säule (4) einer Fahrzeugkarosserie, wobei das System eine an der Säule (4) montierte Vorrichtung (6) zum Bilden eines Hohlraums mit im Wesentlichen geschlossenem Querschnitt in Kombination mit der Säule (4) beinhaltet, die Vorrichtung (6) die Säule hinsichtlich Druckkräften verstärkt, die Elemente (12, 15) des Sicherheitsgurtsystems innerhalb des Hohlraums montiert sind, **dadurch gekennzeichnet, dass**
die Vorrichtung (6) mit einem vordefinierten Bogen (11) versehen ist, der in montiertem Zustand nach außen aus dem Inneren eines Fahrzeugs heraus weist.

2. System nach Anspruch 1, wobei die Vorrichtung einen im Wesentlichen U-förmigen Querschnitt aufweist.

3. System nach Anspruch 1, wobei die Elemente eine Sicherheitsgurt-Schiebeeinheit beinhalten.

4. System nach Anspruch 1, wobei die Elemente einen Sicherheitsgurt-Retraktor (12) beinhalten.

5. System nach Anspruch 4, wobei der Sicherheitsgurt-Retraktor (12) ein automatischer Höhenfeststellungs-Retraktor für automatische Höhenverstellung ist.

6. System nach Anspruch 1, wobei die Vorrichtung (6) mit einer Längsbohrung (10) versehen ist, die an einem Ende (9) einen Durchmesser aufweist, der zum Zwecke der Montage größer als die Breite der Längsbohrung (10) ist.

7. System nach Anspruch 1, wobei die Vorrichtung (6) aus hochfestem Stahl hergestellt ist.

8. Fahrzeug, umfassend ein System zum Montieren eines oder mehrerer Elemente (12, 15) eines Sicherheitsgurtsystems gemäß einem der vorhergehenden Ansprüche.

## Revendications

1. Système pour monter un ou plusieurs éléments (12, 15) d'un système de ceinture de sécurité par rapport à un montant (4) d'un corps de véhicule, dans lequel ledit système comprend un dispositif (6) monté sur ledit montant (4) pour former une cavité avec une section transversale substantiellement fermée en combinaison avec ledit montant, ledit dispositif (6) renforçant le montant (4) face aux forces de compression, les éléments (12, 15) dudit système de ceinture de sécurité monté dans ladite cavité,
**caractérisé en ce que**
ledit dispositif (6) est pourvu d'une courbure prédéfinie (11) qui, dans la position montée, est dirigée vers l'extérieur depuis l'intérieur d'un véhicule.

2. Système selon la revendication 1, dans lequel ledit dispositif possède une section transversale essentiellement en forme de U.

3. Système selon la revendication 1, dans lequel lesdits éléments comprennent un coulisseau de ceinture de sécurité.

4. Système selon la revendication 1, dans lequel lesdits éléments comprennent un écarteur (12) de ceinture de sécurité.

5. Système selon la revendication 4, dans lequel ledit écarteur de ceinture de sécurité (12) est un écarteur à réglage de hauteur automatique, pour un ajustement automatique de la hauteur.

6. Système selon la revendication 1, dans lequel le dispositif (6) est pourvu d'un alésage allongé (10) avec une extrémité (9) de celui-ci présentant un diamètre supérieur à la largeur dudit alésage allongé (10) en vue du montage.

7. Système selon la revendication 1, dans lequel le dispositif (6) est constitué d'un acier à haute limite élastique.

8. Véhicule comprenant un système pour le montage d'un ou de plusieurs éléments (12, 15) d'un système de ceinture de sécurité selon l'une quelconque des revendications précédentes.
